(19) Europäisches Patentamt / European Patent Office / Office européen des brevets

(11) **EP 4 617 719 B1**

(12) **EUROPÄISCHE PATENTSCHRIFT**

(45) Veröffentlichungstag und Bekanntmachung des Hinweises auf die Patenterteilung:
**29.04.2026  Patentblatt 2026/18**

(21) Anmeldenummer: **25157509.8**

(22) Anmeldetag: **12.02.2025**

(51) Internationale Patentklassifikation (IPC):
**G01S 7/4865** *(2020.01)*     **G01S 7/487** *(2006.01)*
**G01S 17/42** *(2006.01)*

(52) Gemeinsame Patentklassifikation (CPC):
**G01S 7/4865; G01S 7/4866; G01S 7/4873;
G01S 17/42**

(54) **DISTANZMESSUNG EINES OBJEKTS MIT EINEM LICHTLAUFZEITVERFAHREN**

DISTANCE MEASUREMENT OF AN OBJECT USING A LIGHT PROPAGATION TIME METHOD

MESURE DE DISTANCE D'UN OBJET AU MOYEN D'UN PROCÉDÉ DE TEMPS DE PROPAGATION DE LA LUMIÈRE

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorität:  **12.03.2024  DE 102024107055**

(43) Veröffentlichungstag der Anmeldung:
**17.09.2025  Patentblatt 2025/38**

(73) Patentinhaber: **SICK AG
79183 Waldkirch (DE)**

(72) Erfinder:
• **Kettel, Johannes
79211 Denzlingen (DE)**
• **Hager, Eiko
79106 Freiburg (DE)**

(56) Entgegenhaltungen:
**EP-A1- 3 418 767     EP-A1- 4 249 950**

**Beschreibung**

Die Erfindung betrifft einen optoelektronischen Sensor und ein Verfahren zur Distanzmessung eines Objekts in einem Erfassungsbereich mit einem Lichtlaufzeitverfahren nach dem Oberbegriff von Anspruch 1 beziehungsweise 9.

Eine Distanz- oder Abstandsmessung kann in den verschiedensten Bereichen wie der Fabrikautomation, der Logistikautomation oder der Sicherheitstechnik eingesetzt werden. Nach einer Spielart des Lichtlaufzeitprinzips (dToF, direct Time of Flight) wird ein kurzer Lichtimpuls ausgesendet und die Zeit bis zur Detektion des remittierten oder reflektierten Lichtimpulses gemessen. Mögliche Anwendungen einer Distanzmessung sind modifizierte Lichtschranken, die den Abstand zwischen ihrem Sender und Empfänger bzw. Reflektor überwachen, oder Schaltsysteme mit binärer Objektanwesenheitserkennung, bei denen der Schaltzustand davon abhängt, ob sich ein Objekt in einem bestimmten Entfernungsbereich befindet. Letztere Sensoren werden auch als hintergrundausblendende Lichttaster bezeichnet. Eine einstrahlige oder eindimensionale Distanzmessung lässt sich durch den Einsatz entsprechend ortsauflösender Empfänger auf eine zeilenförmige oder flächige Distanzmessung erweitern. Laserscanner basieren ebenfalls auf der Lichtlaufzeitmessung, um Entfernungen an entsprechenden Winkelpositionen zu bestimmen.

Die Nachweisempfindlichkeit einfacher Photodioden als Lichtempfänger genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung (Breakdown voltage) vorgespannt (Bias), so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit, wie der namensgebende Geigerzähler, Einzelereignisse. Lawinenphotodioden im Geiger-Modus werden auch als SPADs (Single-Photon Avalanche Diode) bezeichnet.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Jede einzelne SPAD misst daher neben den gewünschten Lichtlaufzeiten auch Störereignisse als scheinbare Laufzeiten. Ein Störereignis trägt dann mit dem gleichen relativ starken Signal zum Messergebnis bei wie das empfangene Nutzlicht und ist davon auch aus dem Signal heraus nicht unterscheidbar. Nach einem Lawinendurchbruch gleich welcher Ursache ist die Empfindlichkeit der Lawinenphotodiode für eine Tot- oder Erholungszeit von ca. 5 bis 100 ns drastisch reduziert, so dass sie so lange für weitere Messungen praktisch ausfällt. Der Pool an für die Messung verfügbaren SPADs reduziert sich somit unter Fremdlichteinfall (PileUp-Effekt).

Somit sind für eine Messung die Nutzereignisse von den Störereignissen zu trennen. Dafür werden herkömmlich zahlreiche Einzelmessungen mit mehreren SPADs und/oder Messwiederholungen durchgeführt, um eine statistische Auswertung zu ermöglichen, insbesondere indem die Einzelmessungen in einem Histogramm gesammelt werden. Dort bildet sich aus den Nutzereignissen ein Peak heraus, der prinzipiell mit einer Schwelle detektierbar ist. Es sind aber sowohl Nutzlicht als auch Störereignisse stark von der jeweiligen Messsituation abhängig. Langsamere Driften wie eine Degradation des Lichtsenders sowie Varianzen in der Fertigung und Bauteiltoleranzen kommen hinzu. Die Festlegung der Schwelle ist daher ausgesprochen anspruchsvoll, und selbst eine optimal angepasste statische Schwelle ist allenfalls unter stark kontrollierten Messbedingungen zielführend.

Die DE 10 2021 118 660 A1 beschreibt einen Laserscanner mit Einzelphotonenlawinendioden und Histogrammauswertung mittels Optimalfilter.

Die EP 3 428 683 A1 offenbart einen optoelektronischen Sensor mit einem Lichtempfänger, der eine Vielzahl von SPADs aufweist. Eine Auswahl dieser SPADs wird in einer 1:1-Verbindung mit jeweils einer Lichtlaufzeitmesseinheit verbunden. Dadurch wird ein interessierender Bereich des Lichtempfängers ausgewählt, auf dem die Lichtlaufzeitmessung beruht. Eine Lösung der geschilderten Schwellenproblematik bietet das Dokument nicht an.

In der EP 3 418 767 B1 werden in einem weiteren gattungsgemäßen optoelektronischen Sensor Parameter zur Beschreibung der exponentiell abfallenden Häufigkeit von Hintergrundereignissen auf Basis eines Binomial-Modells geschätzt und mit einem Medianfilter weiter selektiert. Die Schätzung basiert auf einem jeweiligen Histogramm, in dem Mess- und Störereignisse gemischt auftreten, die Trennung soll der Medianfilter leisten. Zum einen ist dann die statistische Basis mit nur einem Histogramm sehr begrenzt. In bestimmten Messsituationen, etwa dem seitlichen Einfahren eines Objekts in den Erfassungsbereich mit Kantentreffern, gibt es zudem recht beliebige und mehrfache Peaks, mit denen der Medianfilter nicht in der gewünschten Weise umgeht. Außerdem ist ein Medianfilter vergleichsweise rechenaufwändig, weil eine Sortierung erforderlich ist, die in begrenzter und insbesondere Embedded Hardware die Ansprechzeit eines Sensors reduziert.

Aus der EP 4 249 950 A1 ist ein entfernungsmessender optoelektronischer Sensor bekannt, der einen Empfangszeitpunkt mit einer Schwelle bewertet, die mittels einer Pegeinformation dynamisch angepasst wird.

Die Dissertation von Maik Beer, "SPAD-basierte Sensoren für die laufzeitbasierte Distanzmessung bei hoher Hintergrundlichtintensität", Duisburg, Essen, Universität Duisburg-Essen, 2018 befasst sich mit dem Hintergrundlichteinfluss auf die Distanzmessung eines gattungsgemäßen Sensors.

Es ist daher Aufgabe der Erfindung, die Lichtlaufzeitmessung eines SPAD-basierten distanzmessenden Sensors weiter zu verbessern.

Diese Aufgabe wird durch einen optoelektronischen Sensor insbesondere der einleitend genannten Sensorarten und ein Verfahren zur Distanzmessung eines Objekts in einem Erfassungsbereich mit einem Lichtlaufzeitverfahren nach Anspruch 1 beziehungsweise 9 gelöst. Wie bei einer Lichtlaufzeitmessung üblich, sendet ein Lichtsender ein Lichtsignal aus, das in einem Lichtempfänger nach diffuser Remission oder direkter Reflexion an einem Objekt, dessen Entfernung gemessen werden soll, empfangen wird. Vorzugsweise weist das Lichtsignal einen kurzen Puls auf, so dass ein pulsbasiertes Verfahren verwendet wird (Direct Time of Flight, dToF). Der Lichtempfänger umfasst eine erste Vielzahl von Lawinenphotodioden oder Pixeln, die in einem Geiger-Modus betrieben werden können, in dem sie mit einer Vorspannung größer als die Durchbruchsspannung vorgespannt werden, um bei Lichtempfang ein Lawinenereignis auszulösen. Vielfach wird im Folgenden auch der Begriff SPAD für Lawinenphotodioden im Geiger-Modus verwendet. Eine zweite Vielzahl von Lichtlaufzeitmesseinheiten bestimmt jeweilige Einzellichtlaufzeiten zwischen Aussenden und Empfang eines Lichtsignals. Dabei sind die Lichtlaufzeitmesseinheiten bestimmten Lawinenphotodioden zugeordnet, je nach Ausführungsform in einer Beziehung 1:n, 1:1 oder n:1, dies in verschiedenen oder einheitlichen Gruppengrößen. Es ist möglich, dass nur eine Auswahl von Lawinenphotodioden getroffen ist, die überhaupt von einer Lichtlaufzeitmesseinheit ausgewertet werden, um so einen interessierenden Bereich des Lichtempfängers festzulegen, insbesondere wie in EP 3 428 683 A1 beschrieben. Einzellichtlaufzeiten sind zunächst nicht interpretierte Messergebnisse, die ebenso Nutzereignissen des von einem Objekt zurückkehrenden Lichtsignals wie Störereignissen entsprechen können.

Eine Steuer- und Auswertungseinheit wertet die Einzellichtlaufzeiten aus und sammelt sie dazu zunächst über eine Vielzahl von Lichtlaufzeitmesseinheiten und/oder Messwiederholungen, in denen jeweils ein Lichtsignal ausgesandt und für eine Messdauer gewartet wird, in einem Histogramm. Das Histogramm sortiert die Einzellichtlaufzeiten in einer Diskretisierung der Messperiode (zeitliche Bins) ein und zählt die Häufigkeit der jeweiligen Einzellichtlaufzeiten (Count je Bin). Dann wird anhand einer Schwelle ein Nutzlichtsignal oder Peak in dem Histogramm lokalisiert. Aus der zeitlichen Lage des Nutzlichtsignals wird der Distanzwert bestimmt.

Die Erfindung geht von dem Grundgedanken aus, zunächst den Fremdlichtpegel als Information über die aktuelle Messsituation zu schätzen, um so die Schwelle dynamisch anpassen zu können. Die festgelegte Schwelle berücksichtigt die Modellannahmen über den PileUp-Effekt mit einem exponentiellen Abfall der Hintergrundereignisse über die Zeit und hält einen durch eine Sicherheitsmarge definierten Pufferabstand zu den Störereignissen ein, d.h. den Rausch- und Fremdlichtereignissen. Die Parametrierung des Verlaufs der Schwelle erfolgt anhand des aktuell gemessenen Fremdlichtpegels. In der konkreten Implementierung kann es vorteilhaft sein, eine einfacher berechenbare Funktion wie ein Polynom als Näherung der Exponentialfunktion zu verwenden.

Die Erfindung hat den Vorteil, dass eine verlässliche Messung auch unter Fremdlichteinfluss ermöglicht wird. Dank einer dynamischen Anpassung der Schwelle können bei geringem Fremdlicht wenig remittierende Objekte in großer Entfernung erkannt werden, während bei erhöhtem Fremdlicht die Schwelle so gelegt wird, dass eine Fehldetektion vermieden wird. Die in Abhängigkeit des aktuellen Fremdlichtpegels verwendete Schwelle kann sehr sorgfältig schon zur Entwicklungszeit vorbereitet und definiert werden, erforderlichenfalls unter großem Zeitaufwand und mit breiter Datenbasis. Dadurch lassen sich auch Driften beziehungsweise Degradationsprozesse sowie Exemplar-Streuungen über individuelle Sensoren einer Baureihe hinweg berücksichtigen. Zur Laufzeit ist nur noch mit wenig Rechenaufwand eine Auswahl der zu dem aktuellen Fremdlichtpegel passenden Schwelle erforderlich.

Die Lichtlaufzeitmesseinheiten weisen bevorzugt einen TDC (Time-to-Digital Converter) auf. Das ist ein bekanntes und relativ einfaches Bauteil, das mit hoher zeitlicher Auflösung Einzellichtlaufzeiten bestimmen kann. TDCs können direkt monolithisch in einem Kristall des Lichtempfängers integriert werden. Der jeweilige TDC wird vorzugsweise zum Sendezeitpunkt gestartet und zum Empfangszeitpunkt durch den empfangenen Einzellichtpuls gestoppt, oder im Falle eines Störereignisses durch Fremdlicht oder Dunkelrauschen. Andere Betriebsarten sind denkbar, etwa die TDCs jeweils mit dem Auslösen einer Lawine zu starten und dann zu einem bekannten Zeitpunkt anzuhalten, wie dem Ende der Messperiode.

Die Steuer- und Auswertungseinheit ist bevorzugt dafür ausgebildet, den Fremdlichtpegel durch Aufsummieren der ersten Bins des Histogramms zu schätzen. Die ersten Bins werden deshalb verwendet, weil hier noch kein Nutzlicht zurückgekehrt ist und der PileUp-Effekt nur eine geringe Anzahl von Lawinenphotodioden in deren Totzeit geschickt hat. Dabei ist anzumerken, dass die Lawinenphotodioden vorzugsweise inaktiv sind, bis eine Messung startet, um jedenfalls anfangs noch den vollen Pool an rekrutierbaren Lawinenphotodioden bereitzustellen. Eine fallende Exponentialfunktion könnte idealisiert bereits aus zwei Bins rekonstruiert werden. Tatsächlich ist die Messung ein Zufallsexperiment, so dass eine höhere Anzahl von Bins verwendet werden sollte. Dennoch soll mit Aufsummieren der ersten Bins auch eine Teilauswahl beispielsweise des zweiten, fünften und achten Bins umfasst sein und nur vorzugsweise die Einbeziehung aller 1..N ersten Bins gemeint sein. In jedem Fall sind die Counts in den ersten Bins hochkorreliert mit dem Fremdlichtpegel, und dieser Zusammenhang wird zu dessen Bestimmung genutzt. Alternativ kann der Fremdlichtpegel durch einen zusätzlichen dedizierten Fremdlichtempfänger oder mindestens eine dafür reservierte Lawinenphotodiode des Lichtempfängers bestimmt werden.

Die Steuer- und Auswertungseinheit hält bevorzugt eine erste Nachschlagtabelle vor, die einer aufsummierten Anzahl Detektionsereignisse einen Fremdlichtpegel zuordnet. Vorhalten bedeutet, dass die erste Nachschlagtabelle (LUT, Lookup Table) in der Steuer- und Auswertungseinheit oder einem Speicher abgelegt ist, auf den sie zugreifen kann. Die Bestimmung des Fremdlichtpegels zur Laufzeit beschränkt sich dann auf das Aufsummieren der ersten Bins und einen einfachen Tabellenzugriff, um aus der Summe der ersten Bins den passenden Wert für den Fremdlichtpegel zu erhalten. Das ist eine sehr schnelle und einfach handhabbare Implementierung, die mit geringsten Hardwareressourcen auskommt. Zwischenwerte, die in der ersten Nachschlagtabelle fehlen, können interpoliert werden. Dazu wird vorzugsweise eine fest vorgegebene Funktion, insbesondere ein Polynom verwendet, noch bevorzugter diejenige Funktion, die bereits zum Einlernen der ersten Nachschlagtabelle genutzt wurde, wie sogleich erläutert. Häufig wird aber eine einfache lineare Interpolation ausreichen.

Die erste Nachschlagtabelle ist bevorzugt vorab der Distanzmessung dadurch eingelernt, dass der Lichtempfänger wiederholt bei inaktivem Lichtsender einem definierten Fremdlichtpegel ausgesetzt und die jeweilige Summe der ersten Bins eines dabei erzeugten Histogramms bestimmt wird. Das Fremdlicht wird insbesondere durch eine zusätzliche Lichtquelle erzeugt. Das Einlernen erfolgt vor dem eigentlichen Messbetrieb beispielsweise schon in der Entwicklung oder in der Fertigung ab Werk. Dabei wird der Lichtempfänger systematisch variiertem Fremdlicht bekannter Intensität ausgesetzt, ohne Überlagerung mit Nutzlicht durch inaktiven Lichtsender. Es wird jeweils ein Histogramm aufgezeichnet, und dessen erste Bins werden aufsummiert. So entstehen Datenpaare, die einem Fremdlichtpegel eine Summe der ersten Bins zuordnen. Daraus kann durch Mittellungen oder bevorzugt mit einem Funktions- oder Polynomfit die Beziehung zwischen Fremdlichtpegel und Summe der ersten Bins in beliebiger gewünschter Körnung der ersten Nachschlagtabelle abgeleitet werden. Die gefittete Funktion kann im Sensor abgelegt werden, um sie später zur Interpolation zu verwenden.

Die Steuer- und Auswertungseinheit ist bevorzugt dafür ausgebildet, das Aussenden eines Lichtsignals gegenüber einem Startsignal zu verzögern, damit in den ersten Bins des Histogramms kein Nutzlichtsignal registriert wird. Damit kann der Distanzmessbereich unmittelbar vor dem Sensor beginnen, und es ist dennoch sichergestellt, dass die ersten Bins frei von Nutzlicht sind, um daraus den Fremdlichtpegel schätzen zu können. Die zusätzliche Verzögerung kann sehr einfach aus den gemessenen Lichtlaufzeiten herausgerechnet werden. Eine entsprechende Kalibrierung ist in der Regel ohnehin für unvermeidliche interne Signalverzögerungen erforderlich, die im Übrigen die künstliche Verzögerung ersetzen oder ergänzen können.

Die Steuer- und Auswertungseinheit hält bevorzugt eine zweite Nachschlagtabelle vor, die einem Fremdlichtpegel mindestens einen passenden Parameter einer Rechenvorschrift für die Schwelle zuordnet. Die Schwelle ist somit als eine Rechenvorschrift mit mindestens einem vorab nicht festgelegten Parameter vorgegeben, insbesondere mit einem Anteil einer fallenden Exponentialfunktion und einem Anteil einer Sicherheitsmarge, der vorzugsweise ebenfalls auf einer Exponentialfunktion basiert Der mindestens eine Parameter wird dann aus der zweiten Nachschlagtabelle anhand des Fremdlichtpegels ausgelesen und die Schwelle somit an den aktuell herrschenden Fremdlichtpegel dynamisch angepasst Hinsichtlich des Speicherortes, der Art der Verwendung, der möglichen Interpolation und der Vorteile gilt für die zweite Nachschlagtabelle das gleiche wie für die erste Nachschlagtabelle.

Die zweite Nachschlagtabelle ist bevorzugt vorab der Distanzmessung dadurch eingelernt, dass der Lichtempfänger wiederholt bei inaktivem Lichtsender einem definierten Fremdlichtpegel ausgesetzt und die jeweilige Summe $HS = \sum_{i=1}^{M} Histogram(i)$ sowie ein Schwerpunkt $\lambda = \frac{\sum_{i=1}^{M} Histogramm(i) \cdot i}{HS}$ des dabei erzeugten Histogramms bestimmt wird, wobei *Histogram*(*i*) die *i* = 1 ... *M* Bins des Histogramms bezeichnet. Die Summe *HS* und der Schwerpunkt $\lambda$ werden dann als Parameter oder in den Parametern der Schwelle verwendet. Das Einlernszenario ist mit demjenigen für die erste Nachschlagtabelle vergleichbar, insbesondere können beide Nachschlagtabellen zugleich eingelernt werden.

Die Steuer- und Auswertungseinheit ist dafür ausgebildet, die Schwelle anhand der Rechenvorschrift

$a \exp(-b\,i) + S * \sqrt{a \exp(-b\,i)}$ festzulegen, mit den Parametern *a* und *b* und einem Skalierungsfaktor S für die Sicherheitsmarge. Das ist eine konkrete Rechenvorschrift, die das Verhalten des eingesetzten Lichtempfängers gut modelliert. Die Parameter *a* und *b* werden entsprechend dem herrschenden Fremdlichtpegel gesetzt, vorzugsweise einfach aus der zweiten Nachschlagtabelle ausgelesen. Der erste Term modelliert den erwarteten Verlauf der Rauschgrenze. Um Streuungen über einzelne Messungen abzufangen, wird die Schwelle um den zweiten Term als Puffer nach oben verschoben. Die Sicherheitsmarge *S* ist im Gegensatz zu *a* und *b* kein vom Fremdlichtpegel abhängiger Parameter, diese Abhängigkeit berücksichtigt bereits der Anteil unter der Wurzel. Vielmehr wird über die Sicherheitsmarge *S* das Verhältnis von Fehlern erster und zweiter Art abgewogen, also ob eher toleriert wird, wenn ein Objekt als Rauschen übersehen oder wenn umgekehrt ein seltenes starkes Rauschereignis fälschlich als Objekt detektiert wird. Der Sensor wird entsprechend ab Werk oder am Betriebsort durch Setzen von S konfiguriert.

Für die Parameter $a$ und $b$ gilt $a = \frac{Hc}{\lambda}$ und $b = \frac{1}{\lambda}$. Dabei ist $\lambda$ vorzugsweise aus dem Schwerpunkt mindestens eines bei definiertem Fremdlichtpegel bestimmten Histogramms abgeleitet. Diese Parameter folgen aus einer Modellierung des Verhaltens des Lichtempfängers, die sich in der Praxis sehr gut bewährt.

Die Steuer- und Auswertungseinheit ist bevorzugt dafür ausgebildet, je Bin des Histogramms die Anzahl Einzellichtlaufzeiten mit der Schwelle zu vergleichen und überschwellige Bins dem Nutzlichtsignal zuzuordnen. Die Schwelle wird also Bin für Bin angewandt, um diejenigen Bins aufzufinden, in denen rückkehrendes Sendelicht erfasst wurde. Damit ist das Nutzlichtsignal zeitlich lokalisiert. In vielen Messsituationen gibt es nur ein solches Cluster von Bins entsprechend einem einzigen Nutzlichtpeak. Die Lichtlaufzeit kann dann als Maximum, Schwerpunkt oder ähnliches Maß dieser Bins beziehungsweise mittels Fit einer Peakfunktion in diese Bins bestimmt werden. Gibt es mehrere nicht als Nachbarn zusammenhängende überschwellige Bins, so können mehrere Distanzwerte ausgegeben oder beispielsweise der erste, der letzte oder der ausgeprägteste Peak dem Distanzwert zugrunde gelegt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Fig. 1 eine schematische Darstellung eines optoelektronischen Sensors mit Lichtlaufzeitmessung;

Fig. 2 eine schematische Darstellung eines Lichtempfängers und nachgeschalteter Komponenten zur Messauswertung;

Fig. 3 ein beispielhaftes Histogramm aus gemessenen Einzellichtlaufzeiten bei reinem Fremdlichteinfall ohne Nutzlicht mit Illustration des Aufsummierens der ersten Bins;

Fig. 4 eine Darstellung von sechs beispielhaften Histogrammen ähnlich Figur 3 für unterschiedliche Fremdlichtpegel;

Fig. 5 eine Darstellung des Zusammenhangs zwischen den aufsummierten ersten Bins und dem Fremdlichtpegel;

Fig. 6 eine Illustration einer Modellierung des Fremdlichtanteils in einem Histogramm sowie einer mit einer Sicherheitsmarge darüberliegenden Schwelle;

Fig. 7 eine Darstellung von sechs beispielhaften Schwellen ähnlich Figur 6 für unterschiedliche Fremdlichtpegel; und

Fig. 8 eine Darstellung ähnlich Figur6, nun aber mit einem Nutzlichtpeak, der durch die Schwelle erkannt wird.

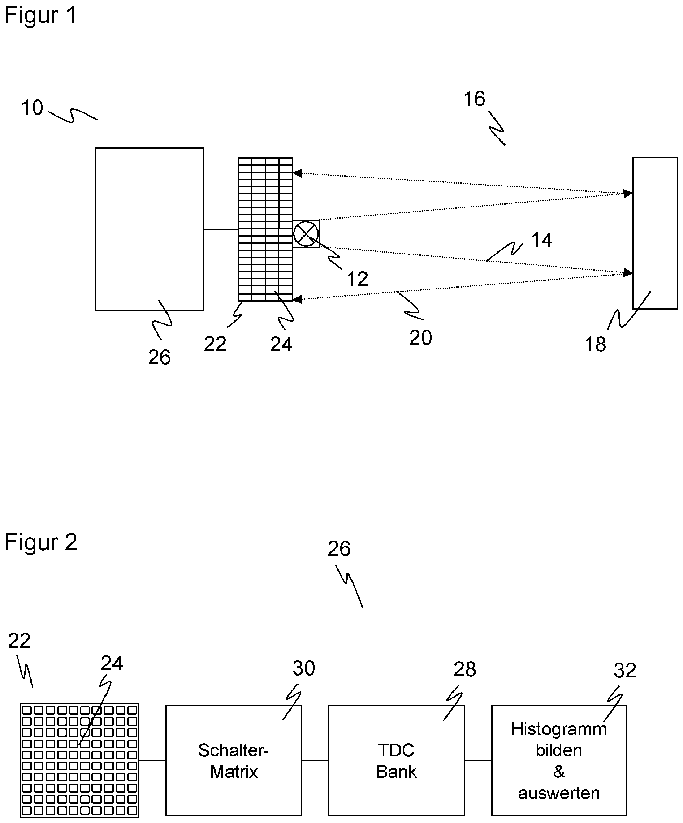

Figur 1 zeigt eine schematische Darstellung eines optoelektronischen Sensors 10 zur Abstandsmessung nach dem Laufzeitprinzip in einer eindimensionalen Ausführungsform. Der Sensor 10 wird stellvertretend für andere lichtlaufzeitmessende Sensoren beschrieben, wie insbesondere einleitend genannt. Ein Lichtsender 12, beispielsweise eine LED oder eine Laserlichtquelle, sendet ein Lichtsignal 14 in einen Überwachungsbereich 16. Befindet sich dort ein Objekt 18, wird ein Teil des Lichts diffus remittiert oder reflektiert und kehrt als remittiertes Lichtsignal 20 zum Sensor 10 zurück, wo es in einem Lichtempfänger 22 registriert wird.

Der Lichtempfänger 22 umfasst eine Vielzahl von Pixelelementen 24, auch SPADs (Single-Photon Avalanche Diode) genannt, die in einem Geiger-Modus betrieben werden können, um bei Lichtempfang ein Lawinenereignis auszulösen, indem sie mit einer Vorspannung vorgespannt werden, die größer ist als eine Durchbruchspannung. Einige grundlegende SPAD-Eigenschaften wurden bereits in der Einleitung beschrieben. Die Pixelelemente 24 sind vorzugsweise in einer Matrix angeordnet. Die Anzahl der Pixelelemente 24 kann variieren, die Matrix kann beispielsweise eine quadratische oder rechteckige Anordnung mit einigen zehn, hunderten oder sogar tausenden von Pixelelementen 24 und mehr sein.

Der Lichtempfänger 22 ist mit einem Sensorsteuerungsblock 26 verbunden. In Figur 1 ist dies nur summarisch dargestellt, ein möglicher Aufbau des Sensorsteuerungsblocks 26 wird noch unter Bezugnahme auf Figur 2 erläutert. Der Sensorsteuerungsblock 26 steuert den Lichtsender 12 so, dass das Lichtsignal 14 ausgesandt wird, vorzugsweise mit einem kurzen Puls im Nanosekunden- oder sogar Pikosekundenbereich. Der Zeitpunkt, zu dem ein Lichtsignal 14 ausgelöst wird, kann als Referenz für die Laufzeitmessung verwendet werden. In anderen Ausführungsformen kann ein Teil des Lichtsignals 14 intern als optische Referenz dienen. Der Sensorsteuerungsblock 26 verarbeitet Signale der Pixelelemente 24, die ausgewertet werden, um die Laufzeit von einem Sendezeitpunkt des ausgesandten Lichtsignals 14 bis zu einem Empfangszeitpunkt des remittierten Lichtsignals 20 zu bestimmen. Die Laufzeit kann mit Hilfe der Lichtgeschwindigkeit in eine Entfernung umgerechnet werden. Die Bestimmung des Empfangszeitpunkts wird später unter Bezugnahme auf die Figuren 2 bis 8 erläutert.

In der Praxis umfasst der Sensor 10 weitere Elemente, insbesondere Sende- und Empfangsoptiken sowie Schnittstellen, die an sich bekannt und der Einfachheit halber weggelassen sind. Eine Aufteilung des Lichtempfängers 22 und des Sensorsteuerungsblocks 26 wie in Figur 1 ist in praktischen Ausführungsformen möglich, dient aber hauptsächlich der Erläuterung. Vorzugsweise sind diese Komponenten zumindest teilweise auf einem gemeinsamen Chip integriert, dessen Oberfläche von den Pixelelementen 24 und den den Pixelelementen 24 oder Gruppen von Pixelelementen 24 zugeordneten oder zuordenbaren Schaltungen zu deren Ansteuerung und Auswertung gemeinsam genutzt wird.

In Figur 1 ist eine koaxiale Anordnung dargestellt, bei der der Lichtsender 12 vor dem Lichtempfänger 22 angeordnet ist. Andere koaxiale Anordnungen sind möglich, beispielsweise mit Hilfe eines Strahlteilers. Denkbar ist auch eine biaxiale oder triangulierende Anordnung, bei der Lichtsender 12 und Lichtempfänger 22 mit gegenseitigem Versatz nebeneinander angeordnet sind. Bei dem Sensor 10 kann es sich um einen eindimensionalen Sensor der in Figur 1 dargestellten Art handeln. Andere nicht abschließend genannte Ausführungsformen sind Lichtschranken, Lichtgitter und Laserscanner. Der Sensor 10 kann einen Abstandswert ausgeben oder anzeigen oder auch als Schalter fungieren, indem ein Schaltereignis ausgelöst wird, wenn ein Objekt in einem bestimmten Abstandsbereich, einschließlich einer Abweichung von einem erwarteten Abstandsbereich, erkannt wird. Mehrere Sensoren 10 können kombiniert werden, beispielsweise zu einem abstandsmessenden oder abstandsüberwachenden Lichtgitter. Denkbar sind auch mobile Systeme, bei denen der Sensor 10 beweglich gelagert ist, oder scannende Systeme, bei denen das ausgesendete Lichtsignal 14 mittels eines beweglichen Spiegels oder durch Bewegen des Messsystems, insbesondere durch eine Drehbewegung, den Überwachungsbereich 16 überstreicht.

Figur 2 zeigt eine schematische Darstellung des Lichtempfängers 22 und nachgeschalteter Komponenten des Sensorsteuerungsblocks 26. Der Lichtempfänger 22 ist wiederum als SPAD-Matrix mit einer Vielzahl von Pixelelementen 24 dargestellt. Einige der Pixelelemente 24 sind mit Laufzeitmesseinheiten 28 verbunden, bei denen es sich in dieser Ausführungsform um Time-to-Digital Converter (TDCs) handelt. Eine Schalteinrichtung 30 bestimmt die Verbindungen, d. h. welche Pixelelemente 24 für die Auswertung ausgewählt werden und von welcher Lichtlaufzeitmesseinheit 28 sie jeweils ausgewertet werden. Die von den Lichtlaufzeitmesseinheiten 28 erzeugten Lichtlaufzeitinformationen werden von einer Steuer- und Auswerteeinheit 32 akkumuliert und ausgewertet, vorzugsweise nach Speicherung der akkumulierten Lichtlaufzeitinformationen in einem nicht gesondert dargestellten Speicher und bevorzugt in Form eines Histogramms. Ein Ergebnis der Auswertung ist ein Distanzwert, der Grundlage für weitere Auswertungen sein kann.

Die Schalteinrichtung 30 kann als programmierbare Matrix oder auf andere Weise ausgebildet sein, um ausgewählte Pixelelemente 24 mit einer ausgewählten Laufzeitmesseinheit 28 nach einem 1:1- oder einem n:1-Schema zu verbinden. Es müssen nicht alle Pixelelemente 24 ausgewertet werden. Ein Grund für das Bilden nur ausgewählter Verbindungen ist, dass eine große Anzahl von Lichtlaufzeitmesseinheiten 28, die der Anzahl der Pixelelemente 24 entspricht, nicht realisierbar oder zumindest zu kostspielig ist und zu viel Chipfläche benötigt. Daher beträgt die Anzahl der Lichtlaufzeitmesseinheiten 28 vorzugsweise nur einen Bruchteil der Anzahl der Pixelelemente 24. Zudem kann das Signal-Rausch-Verhältnis durch die bevorzugte Auswahl von Pixelelementen 24 in einem interessierenden Bereich (ROI, region of interest) verbessert werden, der das remittierte Lichtsignal 20 tatsächlich empfängt.

Die Laufzeitmesseinheiten 28 messen eine jeweilige Einzellichtlaufzeit zwischen dem Senden des ausgesandten Lichtsignals 14 und dem Empfang des remittierten Lichtsignals 20. In einer Ausführungsform werden die Lichtlaufzeitmesseinheiten 28 mit Aussenden des Lichtsignals 14 gestartet und durch ein Lawinenereignis in dem/den angeschlossenen Pixelelement(en) 24 gestoppt. In einer anderen Ausführungsform werden sie durch das Lawinenereignis gestartet und zu einem Referenzzeitpunkt gestoppt, wobei der Versatz zwischen Sendezeitpunkt und Referenzzeitpunkt rechnerisch kompensiert wird. Jede Einzellichtlaufzeit ist für sich genommen sehr unzuverlässig, da der gemessene Lawinendurchbruch durch Umgebungslicht oder Dunkelheitsrauschen statt durch das remittierte Lichtsignal 20 verursacht sein kann, so dass die entsprechende Einzellichtlaufzeit womöglich völlig unkorreliert zu der zu messenden Distanz ist.

Deshalb werden die Einzellichtlaufzeiten der Lichtlaufzeitmesseinheiten 28 in einem Histogramm akkumuliert, bevorzugt für eine verbesserte Statistik auch über Messwiederholungen, und von der Steuer- und Auswerteeinheit 32 ausgewertet. Das Histogramm unterteilt eine Messperiode in zeitliche Bins, in denen jeweils die Anzahl von Einzellichtlaufzeiten gezählt wird, die in das Zeitintervall eines Bins fallen. Bei Empfang des remittierten Lichtsignals 20 bildet sich in diesem Histogramm ein Peak heraus, dessen zeitliche Position den Empfangszeitpunkt bestimmt.

Wie bereits erwähnt, können der Lichtempfänger 22 und die Komponenten des Sensorsteuerblocks 26 auf demselben Chip integriert sein. In einer bevorzugten Ausführungsform sind Lichtempfänger 22, Lichtlaufzeitmesseinheiten 28 und Schalteinrichtung 30 Teil eines ASICs (Application-Specific Integrated Circuit), während die Steuer- und Auswerteeinheit 32 auf einem Mikroprozessor implementiert ist. In einer weiteren Ausführungsform ist die Steuer- und Auswertungseinheit 32 zumindest teilweise ebenfalls in den ASIC integriert. Der Speicher für die Histogramme kann Teil des ASICs, des Mikroprozessors oder ein separates Bauteil sein. Das ist nur eine bevorzugte Hardwarerealisierung, die Funktionalität des Sensorsteuerblocks 26 kann alternativ auf einer oder mehreren beliebigen Hardwarekomponenten implementiert sein, wie ein ASIC, eine CPU (Central Processing Unit), ein FPGA (Field Programmable Gate Array), ein DSP (Digital Signal Processor) oder dergleichen.

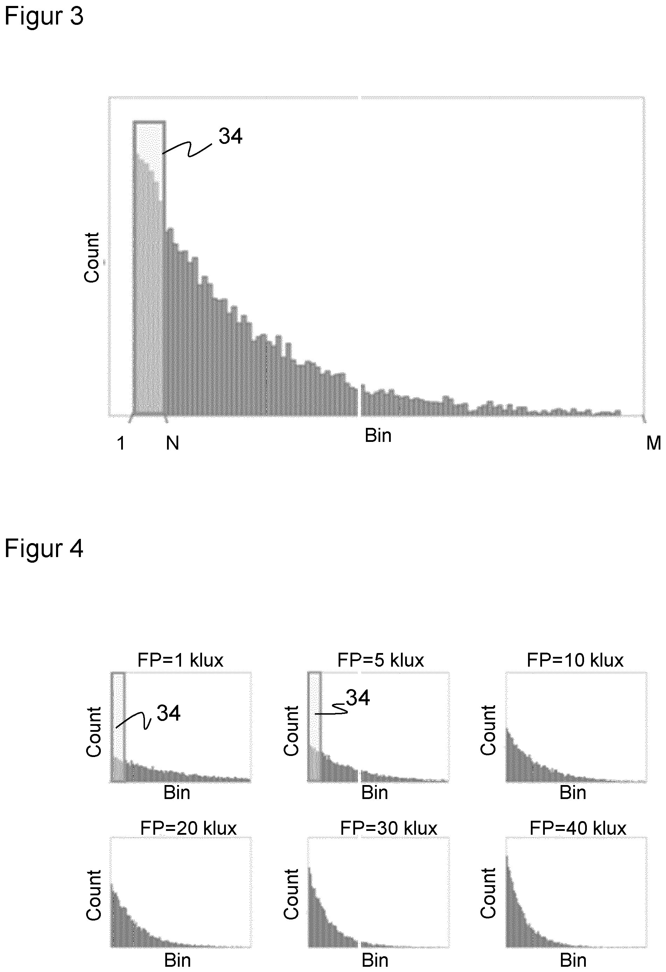

Figur 3 zeigt ein beispielhaftes Histogramm aus gemessenen Einzellichtlaufzeiten bei reinem Fremdlichteinfall ohne Nutzlicht des remittierten Lichtsignals 20. Die jeweilige Anzahl Einzellichtlaufzeiten (Count) ist auf der Y-Achse als Höhe der Balken des jeweiligen Bins auf der X-Achse gezeigt. Ohne Nutzlicht enthält das Histogramm nur einen Rauschanteil oder Hintergrundereignisse (PileUp) in einem exponentiellen Abfall, der aus den Totzeiten der Pixelelemente 24 nach einem Lawinenereignis resultiert. Es sind insgesamt *M* Bins entsprechend einer Messperiode oder maximal erfassbaren Distanz vorgesehen. Aufgrund von unvermeidlichen und/oder absichtlichen Verzögerungen ab dem internen Auslöser für das Senden des Lichtsignals 14 und dem tatsächlichen Sendezeitpunkt ist ein Nutzlichtempfang erst ab dem Bin *N* + 1 möglich. Die ersten *N* Bins können also zur Laufzeit für eine reine Fremdlichtschätzung verwendet werden, wobei im Folgenden sonstige Rauschereignisse vereinfachend dem Fremdlichtanteil zugeschlagen werden. Die in dem Kasten 34 hervorgehobenen aufsummierten ersten *N* Bins, d.h. $FS = \sum_{i=1}^{N} Histogramm(i)$ mit Count *Histogramm*(*i*) im *i*-ten Bin, sind stark mit dem Fremdlichtpegel korreliert:

Figur 4 zeigt eine Darstellung von sechs beispielhaften Histogrammen ähnlich Figur 3 für unterschiedliche Fremdlichtpegel. Indem der Sensor 10 beziehungsweise dessen Lichtempfänger 22 vor dem Messbetrieb, beispielsweise während der Entwicklung, Fertigung oder Inbetriebnahme, solchen bekannten und definierten Fremdlichtpegeln ausgesetzt wird, lassen sich Datenpaare ($FS_n$, $FP_n$) für verschiedene Fremdlichtpegel wie $FP_0 = 0$ *Klux*, $FP_1 = 1$ *KLux*, ... in gewünschter Anzahl gewinnen.

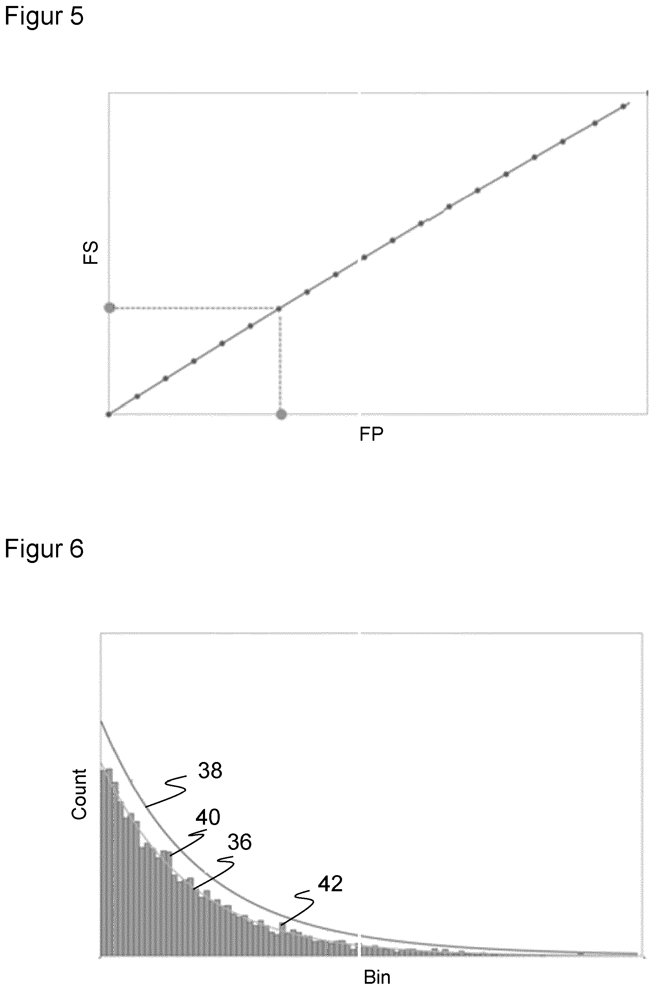

Figur 5 zeigt eine Darstellung des Zusammenhangs zwischen *FP* und *FS,* also dem Fremdlichtpegel und den aufsummierten ersten *N* Bins. Die Datenpaare ($FS_n$, $FP_n$) können verwendet werden, um eine Funktion zu fitten, beispielsweise eine Gerade oder ein Polynom wie $FS_{Fit}(x) = p_0 + p_1 x + p_2 x^2$. Für eine besonders effiziente Implementierung kann daraus eine erste Nachschlagtabelle (Lookup Table) LUT1 in jeder gewünschten Körnung erzeugt werden. Alternativ werden lediglich die Koeffizienten $p_0$, $p_1$, $p_2$ gespeichert. Während des Messbetriebs werden gemessene aufsummierte erste *N* Bins *FS* über erste Nachschlagtabelle LUT1 in geschätzte Fremdlichtpegel FP übersetzt. Zwischenwerte können gerundet oder interpoliert werden.

Alternativ zu einer dynamischen Schätzung des Fremdlichtpegels ist eine feste Konfiguration denkbar, die werkoder kundenseitig eine bestimmte Fremdlichtfestigkeit einstellt und dafür ein FP als Parameter vorgibt. Weiterhin ist als Alternative zur Schätzung des Fremdlichtpegels über aufsummierte erste *N* Bins *FS* der Einsatz eines zusätzlichen Empfangselements beziehungsweise mindestens eines Pixelelements 24 denkbar, in dem durch Kanaltrennung zum Nutzlicht ausschließlich Fremdlicht gemessen wird.

Figur 6 zeigt eine Illustration einer Modellierung des exponentiellen Verlaufs 36 des Fremdlichtanteils in einem Histogramm sowie einer mit einer Sicherheitsmarge darüberliegenden Schwelle 38. Die Festlegung der Schwelle 38 ist das eigentliche Ziel, die Schätzung des Fremdlichtpegels FP ist ein Zwischenschritt dorthin.

Der exponentielle Verlauf 36 kann für jeden Fremdlicht-Pegel FP über wenige Parameter geschätzt werden. Die Dichtefunktion der Exponentialverteilung hat die allgemeine Form:

$$f(i) = \frac{1}{\lambda} \exp\left(-\frac{1}{\lambda} i\right).$$

Der Modell-Parameter $\lambda$ kann mittels Maximum-Likelihood-Methode für jedes gemessene Fremdlicht-Histogramm unter Einbeziehung aller Messwerte geschätzt werden. Die Maximum-Likelihood Methode ermöglicht dabei eine robuste Parameter-Schätzung unter Ausnutzung aller vorhandenen Messdaten in einem Histogramm.

Ein zuverlässiger Schätzwert für $\lambda$ ergibt sich für die Exponentialverteilung als Mittelwert oder Schwerpunkt aller gemessenen Einzellichtlaufzeiten eines Histogramms zu

$$\lambda = \frac{\sum_{i=1}^{M} Histogramm(i) * i}{HS}.$$

$HS = \sum_{i=1}^{M} Histogram(i)$ ist die Summe der Anzahlen aller Bins des Histogramms.

Der exponentielle Verlauf 36 des Fremdlichtanteils ist der Erwartungswert *E*(*i*) für die Anzahl an Hintergrundereignissen in jedem Histogramm-Bin *i* und berechnet sich zu

$$E(i) = HS * f(i) = \frac{HS}{\lambda} \exp\left(-\frac{1}{\lambda} i\right).$$

Das ist noch nicht die Schwelle 38, da auch zumindest einige Bins 40, 42 mit zufällig gegenüber dem Erwartungswert *E*(*i*) erhöhten Anzahlen (Counts) noch darüber liegen. Es soll also dazwischen noch eine Sicherheitsmarge berücksichtigt werden.

Unter Annahme einer Poisson-Verteilung der Fremdlichtereignisse über die Bins kann die Standardabweichung direkt berechnet werden, da hier Erwartungswert und Varianz identisch sind:

$$Std(i) = \sqrt{E(i)} = \sqrt{\frac{HS}{\lambda} \exp\left(-\frac{1}{\lambda} i\right)}.$$

Durch Skalierung der Standardabweichung mit einem gewünschten Faktor $S$ beispielsweise im Bereich $S = 2 \dots$ 6 für die Sicherheitsmarge kann nun die zugehörige Schwelle 38 festgelegt werden, die in den folgenden Formeln als Rauschgrenze $RG(i)$ des jeweiligen i-ten Bins bezeichnet ist:

$$RG(i) = E(i) + S * Std(i).$$

Wird nun für einen bestimten Fremdlicht-Pegel $FP_n$ der Parameter $\lambda_n$ und $HS_n$ aus einem Fremdlichthistogramm wie oben beschrieben via Maximum-Likelihood bestimmt, dann gilt für die Schwelle 38

$$RG_n(i) = \frac{HS_n}{\lambda_n} \exp\left(-\frac{1}{\lambda_n} i\right) + preFact * \sqrt{\frac{HS_n}{\lambda_n} \exp\left(-\frac{1}{\lambda_n} i\right)}.$$

Definiert man nun Parameter ($a_n$, $b_n$) als

$$\left(b_n = \frac{1}{\lambda_n}, \qquad a_n = \frac{HS_n}{\lambda_n}\right),$$

so vereinfacht sich die Schwelle 38 zu

$$RG_n(i) = \boldsymbol{a_n} \exp(-\boldsymbol{b_n}\, i) + S * \sqrt{\boldsymbol{a_n} \exp\left(-\boldsymbol{b_n}\, i\right)},$$

und es kann eine zweite Nachschlagtabelle LUT2 gebildet werden, die einem jeweiligen Fremdlichtpegel $FP_n$ die Parameter ($a_n$, $b_n$) zuordnet. Im Messbetrieb müssen dann lediglich die Parameter ($a_n$, $b_n$) mit dem aktuellen Fremd-lichtpegel $FP_n$ nachgeschlagen werden, um die Schwelle 38 mit der obigen Gleichung für $RG_n(i)$ je Bin $i$ berechnen zu können. Der Fremdlichtpegel $FP_n$ wiederum ist wie beschrieben aus der ersten Nachschlagtabelle LUT1 gewonnen oder anderweitig gemessen. Um den Aufwand für das Berechnen einer Exponentialfunktion und Wurzel zu reduzieren, kann eine Näherung beispielsweise in Form eines Polynoms verwendet werden.

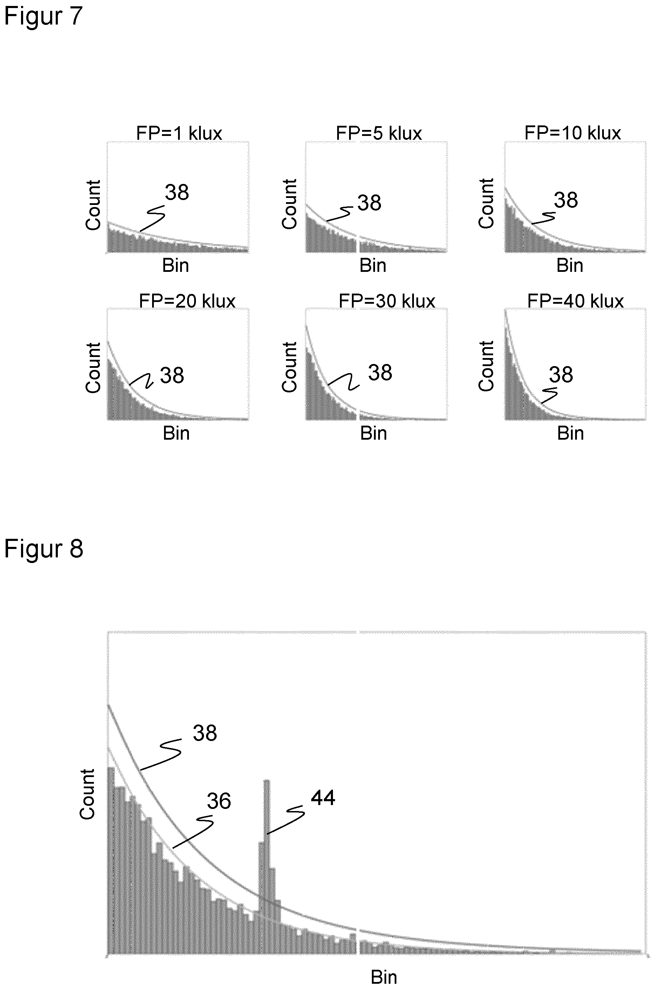

Figur 7 zeigt eine Darstellung von sechs beispielhaften Schwellen 38 ähnlich Figur 6 für unterschiedliche Fremdlichtpegel $FP$, die nach dem soeben erläuterten Vorgehen bestimmt sind.

Figur 8 zeigt eine Darstellung ähnlich Figur 6 zur Erläuterung der weiteren Auswertung unter Verwendung der passenden Schwelle 38. Im Gegensatz zu den bisher gezeigten Histogrammen wurde hier auch ein Nutzlichtpeak 44 registriert, der über die Schwelle 38 sicher vom Hintergrund abgegrenzt wird. Es werden beispielsweise die Anzahlen jedes Bins $i$ mit der zugehörigen Schwelle $RG_n(i)$ verglichen. Die Bins mit einer überschwelligen Anzahl enthalten die Information über die zeitliche Lage des gesuchten Nutzlichtpeaks 44. Gibt es mehr als ein überschwelliges Bin, so kann beispielsweise das Maximum, ein Schwerpunkt oder ein vergleichbares Maß, insbesondere mit dem exponentiellen Abfall gewichtet, aus den überschwelligen Bins gebildet werden, um den Empfangszeitpunkt zu bestimmen. Alternativ kann ein Verlauf des Sendepulses gefittet werden, dies auch in vereinfachter Form beispielsweise einer Parabel. Gibt es mehrere nicht zusammenhängende überschwellige Bins, so wird das erste, ausgeprägteste, letzte oder sonst nach einer Regel vorgegebene Cluster ausgewählt, oder es werden mehrere Empfangszeitpunkte für mehrere Cluster berechnet. Solch eine Mehrzielmessung ergibt sich beispielsweise bei einem Objekt hinter einem anderen (halb-)transparenten Objekt.

In einer besonders bevorzugten Ausführungsform werden zur Entwicklungszeit die beiden Nachschlagtabellen LUT1 und LUT2 wie beschrieben und mitunter mit durchaus großem Zeit- und Messaufwand bestimmt und in dem jeweiligen Sensor 10 gespeichert. Im Betrieb genügt es dann, die Summe $FS$ der ersten $N$ Bins eines Histogramms zu berechnen und aus der ersten Nachschlagtabelle LUT1 einen Fremdlichtpegel $FP_n$ auszulesen. Dazu wiederum wird die korrespondierende Rauschgrenze $RG_n$ aus der zweiten Nachschlagtabelle LUT2 gelesen beziehungsweise aus wenigen Parametern der zweiten Nachschlagtabelle LUT2, wie ($a_n$, $b_n$), eine vorgegebene Rechenvorschrift für die Schwelle 38 angepasst. Mit dieser Schwelle 38 wird dann der Nutzlichtpeak 44 vor dem Hintergrund in der aktuellen Fremdlichtsituation verlässlich erkannt.

**Patentansprüche**

1.  Optoelektronischer Sensor (10) zur Distanzmessung eines Objekts (18) in einem Erfassungsbereich (16) mit einem Lichtlaufzeitverfahren, wobei der Sensor (10) einen Lichtsender (12) zum Aussenden eines Lichtsignals (14) in den Erfassungsbereich (16), einen Lichtempfänger (22) mit einer ersten Vielzahl von Lawinenphotodioden (24) im Geiger-Modus zur Erfassung von Empfangslicht (20) aus dem Erfassungsbereich (16), eine zweite Vielzahl von Lichtlaufzeitmesseinheiten (28) zur Bestimmung von Einzellichtlaufzeiten zwischen Aussenden eines Lichtsignals (14) und Auslösen eines Detektionsereignisses in einer Lawinenphotodiode (24) sowie eine Steuer- und Auswertungseinheit (32) aufweist, die dafür ausgebildet ist, Einzellichtlaufzeiten in einem Histogramm zu sammeln, anhand einer Schwelle (38) ein Nutzlichtsignal (44) in dem Histogramm zu lokalisieren und aus dem Nutzlichtsignal (44) einen Distanzwert zu dem Objekt (18) zu bestimmen, dafür zunächst aus dem Histogramm einen Fremdlichtpegel zu schätzen und dann anhand des Fremdlichtpegels mit der Rechenvorschrift $a \exp(-b\,i) + S * \sqrt{a \exp(-b\,i)}$ die Schwelle (38) so festzulegen, dass sie mit einer Sicherheitsmarge oberhalb einer erwarteten exponentiell abfallenden Anzahl Rausch- und Fremdlichtereignisse liegt, mit den Parametern $a = \frac{HS}{\lambda}$ und $b = \frac{1}{\lambda}$, einem Skalierungsfaktor S für die Sicherheitsmarge, $HS = \sum_{i=1}^{M} Histogram(i)$ und $\lambda = \frac{\sum_{i=1}^{M} Histogramm(i) \cdot i}{HS}$, wobei *Histogram*(*i*) die *i* = 1... *M* Bins des Histogramms bezeichnet.

2.  Sensor (10) nach Anspruch 1,
    wobei die Steuer- und Auswertungseinheit (32) dafür ausgebildet ist, den Fremdlichtpegel durch Aufsummieren der ersten Bins des Histogramms zu schätzen.

3.  Sensor (10) nach Anspruch 2,
    wobei die Steuer- und Auswertungseinheit (32) eine erste Nachschlagtabelle vorhält, die einer aufsummieren Anzahl Detektionsereignisse einen Fremdlichtpegel zuordnet.

4.  Sensor (10) nach Anspruch 3,
    wobei die erste Nachschlagtabelle vorab der Distanzmessung dadurch eingelernt ist, dass der Lichtempfänger (22) wiederholt bei inaktivem Lichtsender (12) einem definierten Fremdlichtpegel ausgesetzt und die jeweilige Summe der ersten Bins eines dabei erzeugten Histogramms bestimmt wird.

5.  Sensor (10) nach einem der vorhergehenden Ansprüche,
    wobei die Steuer- und Auswertungseinheit (32) dafür ausgebildet ist, das Aussenden eines Lichtsignals (14) gegenüber einem Startsignal zu verzögern, damit in den ersten Bins des Histogramms kein Nutzlichtsignal registriert wird.

6.  Sensor (10) nach einem der vorhergehenden Ansprüche,
    wobei die Steuer- und Auswertungseinheit (32) eine zweite Nachschlagtabelle vorhält, die einem Fremdlichtpegel mindestens einen passenden Parameter einer Rechenvorschrift für die Schwelle (38) zuordnet.

7.  Sensor (10) nach Anspruch 6,
    wobei die zweite Nachschlagtabelle vorab der Distanzmessung dadurch eingelernt ist, dass der Lichtempfänger (22) wiederholt bei inaktivem Lichtsender (12) einem definierten Fremdlichtpegel ausgesetzt wird und jeweils *HS* und $\lambda$ des dabei erzeugten Histogramms bestimmt werden.

8.  Sensor (10) nach einem der vorhergehenden Ansprüche,
    wobei die Steuer- und Auswertungseinheit (32) dafür ausgebildet ist, je Bin des Histogramms die Anzahl Einzellichtlaufzeiten mit der Schwelle (38) zu vergleichen und überschwellige Bins dem Nutzlichtsignal (44) zuzuordnen.

9.  Verfahren zur Distanzmessung eines Objekts (18) in einem Erfassungsbereich (16) mit einem Lichtlaufzeitverfahren, wobei ein Lichtsignal (14) in den Erfassungsbereich (16) ausgesandt wird, ein Lichtempfänger (22) mit einer ersten Vielzahl von Lawinenphotodioden (24) im Geiger-Modus Empfangslicht (20) aus dem Erfassungsbereich (16) erfasst, eine zweite Vielzahl von Lichtlaufzeitmesseinheiten (28) Einzellichtlaufzeiten zwischen Aussenden eines Lichtsignals (14) und Auslösen eines Detektionsereignisses in einer Lawinenphotodiode (24) bestimmt, Einzellichtlaufzeiten in einem Histogramm gesammelt werden, anhand einer Schwelle (38) ein Nutzlichtsignal (44) in dem Histogramm lokalisiert wird und aus dem Nutzlichtsignal (44) ein Distanzwert zu dem Objekt bestimmt wird, wobei zunächst aus dem Histogramm ein Fremdlichtpegel geschätzt und dann anhand des Fremdlichtpegels mit der Rechenvorschrift $a \exp(-b\,i) + S * \sqrt{a \exp(-b\,i)}$ die Schwelle (38) so festgelegt wird, dass sie mit einer Sicherheitsmarge oberhalb einer erwarteten exponentiell abfallenden Anzahl Rausch- und Fremdlichtereignisse liegt, mit den Parametern $a = \frac{HS}{\lambda}$ und $b = \frac{1}{\lambda}$, einem Skalierungsfaktor S für die Sicherheitsmarge, $HS = \sum_{i=1}^{M} Histogram(i)$ und $\lambda = \frac{\sum_{i=1}^{M} Histogramm(i)\cdot i}{HS}$, wobei *Histogram(i)* die *i* = 1 ... *M* Bins des Histogramms bezeichnet.

## Claims

1. An optoelectronic sensor (10) for the distance measurement of an object (18) in a detection zone (16) using a time of flight method, wherein the sensor (10) has a light transmitter (12) for transmitting a light signal (14) into the detection zone (16), a light receiver (22) having a first plurality of Geiger-mode avalanche photodiodes (24) for detecting received light (20) from the detection zone (16), a second plurality of time of flight measurement units (28) for determining individual times of flight between a transmission of a light signal (14) and a triggering of a detection event in an avalanche photodiode (24), and a control and evaluation unit (32) which is configured to collect individual times of flight in a histogram, to localize a useful light signal (44) in the histogram with reference to a threshold (38), and to determine a distance value from the object (18) from the useful light signal (44), to first estimate an extraneous light level from the histogram for this purpose and then to fix the threshold (38) using the extraneous light level using the calculation rule $a \exp(-b\,i) + S * \sqrt{a \exp(-b\,i)}$ such that it is above an expected exponentially decreasing number of noise and extraneous light events with a safety margin, using the parameters $a = \frac{HS}{\lambda}$ and $b = \frac{1}{\lambda}$, a scaling factor S for the safety margin, $HS = \sum_{i=1}^{M} Histogram(i)$ and $\lambda = \frac{\sum_{i=1}^{M} Histogramm(i)*i}{HS}$, where *Histogram(i)* designates the *i* = 1 ... *M* bins of the histogram.

2. A sensor (10) in accordance with claim 1, wherein the control and evaluation unit (32) is configured to estimate the extraneous light level by summing the first bins of the histogram.

3. A sensor (10) in accordance with claim 2, wherein the control and evaluation unit (32) stores a first lookup table which associates an extraneous light level with a summed number of detection events.

4. A sensor (10) in accordance with claim 3, wherein the first lookup table is taught in advance to the distance measurement in that the light receiver (22) is repeatedly exposed to a defined extraneous light level with an inactive light transmitter (12) and the respective sum of the first bins of a histogram generated in this process is determined.

5. A sensor (10) in accordance with any one of the preceding claims, wherein the control and evaluation unit (32) is configured to delay the transmission of a light signal (14) with respect to a start signal so that no useful light signal is registered in the first bins of the histogram.

6. A sensor (10) in accordance with any one of the preceding claims, wherein the control and evaluation unit (32) stores a second lookup table which associates at least one matching parameter of a calculation rule for the threshold (38) with an extraneous light level.

7. A sensor (10) in accordance with claim 6, wherein the second lookup table is taught in advance to the distance measurement in that the light receiver (22) is repeatedly exposed to a defined extraneous light level with an inactive light transmitter (12) and *HS* and $\lambda$ of the histogram generated in this process are determined in each case.

8. A sensor (10) in accordance with any one of the preceding claims,
wherein the control and evaluation unit (32) is configured to compare the number of individual times of flight per bin of the histogram with the threshold (38) and to associate bins above the threshold with the useful light signal (44).

9. A method for the distance measurement of an object (18) in a detection zone (16) using a time of flight method, wherein a light signal (14) is transmitted into the detection zone (16), a light receiver (22) having a first plurality of Geiger-mode avalanche photodiodes (24) detects received light (20) from the detection zone (16), a second plurality of time of flight measurement units (28) determines individual times of flight between a transmission of a light signal (14) and a triggering of a detection event in an avalanche photodiode (24), individual times of flight are collected in a histogram, a useful light signal (44) is localized in the histogram with reference to a threshold (38), and a distance value from the object is determined from the useful light signal (44),
wherein an extraneous light level is first estimated from the histogram and then the threshold (38) is fixed using the extraneous light level using the calculation rule $a\exp(-b\,i) + S * \sqrt{a\exp(-b\,i)}$ such that it is above an expected exponentially decreasing number of noise and extraneous light events with a safety margin, using the parameters $a = \dfrac{HS}{\lambda}$ and $b = \dfrac{1}{\lambda}$, a scaling factor S for the safety margin, $HS = \sum_{i=1}^{M} Histogram(i)$ and $\lambda = \dfrac{\sum_{i=1}^{M} Histogramm(i)*i}{HS}$, where *Histogram*(*i*) designates the *i* = 1 ... M bins of the histogram.

**Revendications**

1. Capteur optoélectronique (10) pour mesurer la distance d'un objet (18) dans une zone de détection (16) à l'aide d'un procédé de mesure du temps de propagation de la lumière, le capteur (10) comprenant un émetteur de lumière (12) pour émettre un signal lumineux (14) dans la zone de détection (16), un récepteur de lumière (22) muni d'une première pluralité de photodiodes à avalanche (24) en mode Geiger pour détecter la lumière reçue (20) provenant de la zone de détection (16), une deuxième pluralité d'unités de mesure du temps de propagation de la lumière (28) pour déterminer les temps de propagation individuels de la lumière entre l'émission d'un signal lumineux (14) et le déclenchement d'un événement de détection dans une photodiode à avalanche (24), ainsi qu'une unité de commande et d'évaluation (32) qui est conçue pour collecter les temps de propagation individuels de la lumière dans un histogramme, localiser un signal lumineux utile (44) dans l'histogramme à l'aide d'un seuil (38) et déterminer une valeur de distance par rapport à l'objet (18) à partir du signal lumineux utile (44), et, à cet effet, estimer d'abord un niveau de lumière parasite à partir de l'histogramme, puis, à l'aide du niveau de lumière parasite, fixer le seuil (38) par la règle de calcul $a\exp(-b\,i) + S * \sqrt{a\exp(-b\,i)}$, de manière à ce qu'il se situe, avec une marge de sécurité, au-dessus d'un nombre attendu d'événements de bruit et de lumière parasite décroissant de manière exponentielle, avec les paramètres $a = \dfrac{HS}{\lambda}$ et $b = \dfrac{1}{\lambda}$, un facteur d'échelle S pour la marge de sécurité, $HS = \sum_{i=1}^{M} Histogram(i)$ et $\lambda = \dfrac{\sum_{i=1}^{M} Histrogramm(i)*i}{HS}$, où *Histogram(i)* désigne les *i* = 1... *M* bins de l'histogramme.

2. Capteur (10) selon la revendication 1,
dans lequel l'unité de commande et d'évaluation (32) est conçue pour estimer le niveau de lumière parasite en additionnant les premiers bins de l'histogramme.

3. Capteur (10) selon la revendication 2,
dans lequel l'unité de commande et d'évaluation (32) contient une première table de consultation qui attribue un niveau de lumière parasite à un nombre additionné d'événements de détection.

4. Capteur (10) selon la revendication 3,
dans lequel la première table de consultation est apprise préalablement à la mesure de distance du fait que le récepteur de lumière (22) est soumis de manière répétée à un niveau de lumière parasite défini, alors que l'émetteur de lumière (12) est inactif, et que la somme respective des premiers bins d'un histogramme ainsi généré est déterminée.

**5.** Capteur (10) selon l'une des revendications précédentes,
dans lequel l'unité de commande et d'évaluation (32) est conçue pour retarder l'émission d'un signal lumineux (14) par rapport à un signal de démarrage, afin qu'aucun signal lumineux utile ne soit enregistré dans les premiers bins de l'histogramme.

**6.** Capteur (10) selon l'une des revendications précédentes,
dans lequel l'unité de commande et d'évaluation (32) met à disposition une deuxième table de consultation qui attribue à un niveau de lumière parasite au moins un paramètre approprié d'une règle de calcul pour le seuil (38).

**7.** Capteur (10) selon la revendication 6,
dans lequel la deuxième table de consultation est apprise préalablement à la mesure de distance du fait que le récepteur de lumière (22) est soumis de manière répétée à un niveau de lumière parasite défini, alors que l'émetteur de lumière (12) est inactif, et que *HS* et $\lambda$ de l'histogramme ainsi généré sont déterminés.

**8.** Capteur (10) selon l'une des revendications précédentes,
dans lequel l'unité de commande et d'évaluation (32) est conçue pour comparer, pour chaque bin de l'histogramme, le nombre de temps de propagation individuels de la lumière avec le seuil (38) et pour attribuer les bins supérieurs au seuil au signal lumineux utile (44).

**9.** Procédé de mesure de la distance d'un objet (18) dans une zone de détection (16) à l'aide d'un procédé de mesure du temps de propagation de la lumière,

dans lequel un signal lumineux (14) est émis dans la zone de détection (16), un récepteur de lumière (22) muni d'une première pluralité de photodiodes à avalanche (24) en mode Geiger détecte la lumière reçue (20) provenant de la zone de détection (16), une deuxième pluralité d'unités de mesure du temps de propagation de la lumière (28) détermine les temps de propagation individuels entre l'émission d'un signal lumineux (14) et le déclenchement d'un événement de détection dans une photodiode à avalanche (24), les temps de propagation individuels sont collectés dans un histogramme, un signal lumineux utile (44) est localisé dans l'histogramme à l'aide d'un seuil (38), et une valeur de distance par rapport à l'objet est déterminée à partir du signal lumineux utile (44), un niveau de lumière parasite est d'abord estimé à partir de l'histogramme, puis le seuil (38) est fixé à l'aide du niveau de lumière parasite par la règle de calcul

$a \exp(-b\,i) + S * \sqrt{a \exp(-b\,i)}$ , de manière à ce qu'il se situe, avec une marge de sécurité, au-dessus d'un nombre attendu d'événements de bruit et de lumière parasite décroissant de manière exponentielle, avec les paramètres $a = \dfrac{HS}{\lambda}$ et $b = \dfrac{1}{\lambda}$ , un facteur d'échelle S pour la marge de sécurité, $HS = \sum_{i=1}^{M} Histogram(i)$ et $\lambda = \dfrac{\sum_{i=1}^{M} Histrogramm(i)*i}{HS}$ , où *Histogram*(*i*) désigne les *i* = 1... *M* bins de l'histogramme.

Figur 1

Figur 2

| Schalter-Matrix | TDC Bank | Histogramm bilden & auswerten |

Figur 3

Figur 4

Figur 5

Figur 6

Figur 7

Figur 8

**IN DER BESCHREIBUNG AUFGEFÜHRTE DOKUMENTE**

**In der Beschreibung aufgeführte Patentdokumente**

- DE 102021118660 A1
- EP 3428683 A1
- EP 3418767 B1
- EP 4249950 A1

**In der Beschreibung aufgeführte Nicht-Patentliteratur**

- **VON MAIK BEER**. *SPAD-basierte Sensoren für die laufzeitbasierte Distanzmessung bei hoher Hintergrundlichtintensität*, 2018